**Europäisches Patentamt**

**European Patent Office**

**Office européen des brevets**

(19)

(11) Veröffentlichungsnummer : **0 379 855 B1**

(12) # EUROPÄISCHE PATENTSCHRIFT

(45) Veröffentlichungstag der Patentschrift :
**01.09.93 Patentblatt 93/35**

(51) Int. Cl.$^5$ : **G01B 21/18,** G01B 17/00, G01B 7/26

(21) Anmeldenummer : **89890318.2**

(22) Anmeldetag : **13.12.89**

(54) **Verfahren zur Längenmessung und Vorrichtung zur Durchführung des Verfahrens.**

(30) Priorität : **16.01.89 AT 68/89**
**16.10.89 AT 2375/89**

(43) Veröffentlichungstag der Anmeldung :
**01.08.90 Patentblatt 90/31**

(45) Bekanntmachung des Hinweises auf die
Patenterteilung :
**01.09.93 Patentblatt 93/35**

(84) Benannte Vertragsstaaten :
**AT BE CH DE ES FR GB GR IT LI LU NL SE**

(56) Entgegenhaltungen :
**FR-A- 1 467 228**
**FR-A- 2 185 095**
**GB-A- 842 241**
**US-A- 3 237 445**
**WERKSTOFFPRÜFUNG MIT ULTRASCHALL,**
**4. Auflage, Springer-Verlag Berlin, Heidelberg,**
**New York, 1980, J. UND H. KRAUTKRÄMER,**
**Seiten 265-267**
**Physik, Springer-Verlag, 1989, Gerthsen/Kne-**
**ser/Vogel, 16. Auflage, S. 171-173, Kapitel**
**4.4.3, "Stehende elastische Wellen"**

(73) Patentinhaber : **Hrdlicka, Armin W.**
**Anzengruberstrasse 34/4**
**A-9020 Klagenfurt Kärnten (AT)**

(72) Erfinder : **Hrdlicka, Armin W.**
**Anzengruberstrasse 34/4**
**A-9020 Klagenfurt (Kärnten) (AT)**
Erfinder : **Pribyl, Wolfgang, Dipl.-Ing. Dr.**
**Techn.**
**Schiessstattgasse 14b**
**A-8010 Graz (Steiermark) (AT)**
Erfinder : **Schuster, Hermann**
**Hochleitenweg**
**A-8061 St. Radegund (Stmk.) (AT)**
Erfinder : **Loibner, Klaus**
**Brunnbodensiedlung 4**
**A-8101 Gratkorn (Stmk.) (AT)**
Erfinder : **Koffler, Harald, Dipl.-Ing.**
**Strassgangerstrasse 15**
**A-8020 Graz (Steiermark) (AT)**

(74) Vertreter : **Beer, Otto, Dipl.-Ing. et al**
**Patentanwälte Dipl.-Ing. Otto Beer Dipl.-Ing.**
**Manfred Beer Lindengasse 8**
**A-1070 Wien (AT)**

EP 0 379 855 B1

## Beschreibung

Die Erfindung betrifft ein Verfahren zum berührungsfreien Bestimmen der Länge einer Säule aus einem flüssigen oder gasförmigen Stoff, die in einem einseitig geschlossenen oder beidseitig offenen, rohrförmigen Hohlraum enthalten ist oder eines Stabes aus einem festen Stoff und eine Vorrichtung zum Durchführen des Verfahrens.

Die derzeit bekannten Verfahren zur Messung von Pegelständen, sei es in der Hydrologie, im Oberwasser- oder im Grundwasserbereich, bei Studien zur Berechnung von Kanälen für Abwasser oder zur Messung von Füllständen von Tanks, beruhen vorwiegend auf althergebrachten oder aufwendigen Meßtechniken, die beispielsweise Drucksonden oder Schwimmer verwenden oder auf Laufzeitmessungen beruhen (Echolot).

Neben den seit vielen Jahren verwendeten Schwimmern, deren vom zu messenden Pegelstand abhängige Höhenlage über Zahnräder erfaßt wird, verwendet man Drucksonden, die über einen Drucksensor an der Sondenspitze Säulen von Flüssigkeiten zwischen Sondenspitze und Oberfläche des Mediums messen.

In der Hydrologie kommen für stationäre Meßanordnungen auch Meßverfahren zum Einsatz, die mittels Druckgleichgewicht an einem Wägesystem die Höhe einer Wassersäule über einem sogenannten Ausperlmundstück messen (z.B. Druckluftpegel $\Omega$ der Fa. SEBA Hydrometrie, Kaufbeuren).

Daneben werden auch Kabellichtlote und Tiefenlotgeräte verwendet. Bei Kabellichtloten wird das Eintauchen einer Sondenspitze in das Grundwasser, dessen Pegel zu messen ist, über ein Kontrollicht angezeigt. Über eine am Kabel befindliche Längeneinteilung läßt sich die Höhe bis zur Wasseroberfläche ablesen. Bei Tiefenlotgeräten wird beim Auftreffen des Lots auf die Wasseroberfläche ein Zählwerk angehalten, so daß ebenfalls die Höhe bis zur Wasseroberfläche erfaßt werden kann.

Bei den bekannten Laufzeitmessungen unter Verwendung von Echoloten wird ein von einem Impulsgeber ausgesandter Impuls an der Wasseroberfläche oder einem sonstigen Gegenstand reflektiert und die Zeit zwischen Impulsabstrahlung und Empfang des reflektierten Impulses als Maß für die zurückgelegte Strecke gemessen. Solche Impuls-Echo-Messungen kommen in der Hydrologie aus Kostengründen kaum zum Einsatz.

Ein Nachteil der bekannten mechanischen Meßverfahren ist es, daß die Meßwerte von Apparaten stammen, die nur ungenau arbeiten. Abgesehen von den Ungenauigkeiten, die auf Temperaturschwankungen zurückzuführen sind, ergeben sich auch Schwierigkeiten z.B. beim Einsetzen von Schwimmern in Peilrohre, wie sie für Grundwasserstandmessungen verwendet werden, insbesondere wenn diese häufig recht langen Peilrohre gebogen sind.

Ungenauigkeiten, die durch Temperaturänderungen bedingt sind, treten auch bei Kabellichtloten und Tiefenlotgeräten auf. Bei diesen Meßgeräten kommt als zusätzliche nachteilige Fehlerquelle noch die Dehnung des Kabels durch sein Eigengewicht hinzu. Sonden, die bei stationären Anlagen längere Zeit im Wasser hängen, können undicht werden. Auch kommt es vor, daß die Sonden beim Herausziehen abreißen und somit verlorengehen.

In der FR-PS 2.185.095 wird ein Verfahren beschrieben, mit dem Abmessungen von Prüfkörpern bestimmt werden können. Hierzu werden die Prüfkörper in eine Hochfrequenzkammer gebracht und zwei Frequenzen ermittelt, die Resonanzfrequenzen des Prüfkörpers sind, dessen Abmessungen bestimmt werden sollen. Auf Grund der in der FR-PS 2.185.095 angegebenen Gleichungen können dann die Abmessungen des Prüfkörpers berechnet werden. Als Anwendungsbeispiel ist in der FR-PS 2.185.095 die Ermittlung von Wärmeausdehnungskoeffizienten des Werkstoffes, aus dem der Prüfkörper besteht, angegeben.

Irgendein Hinweis darauf, in einem mit einem Gas oder einer Flüssigkeit gefüllten Hohlraum oder in einem Stab, dessen Länge zu ermitteln ist, eine stehende Welle zu erzeugen und dann aufeinanderfolgende Maxima zu ermitteln (oder zwei Minima oder ein Maximum, auf das ein Minimum folgt), ist der FR-PS 1.185.085 nicht zu entnehmen.

In der US-PS 3 237 445 wird von der herkömmlichen Dickenbestimmung aufgrund der Gleichung t = c/f mit Hilfe der Resonanzfrequenz der nullten Ordnung des Körpers (fundamental resonant frequency), dessen Dicke zu bestimmen ist, ausgegangen. Zu dem bekannten Verfahren wird in der US-PS 3 237 445 noch angegeben, daß die Resonanzfrequenz durch kontinuierliche Änderung der Frequenz des Ultraschalls dadurch ermittelt wird, daß angenommen wird, daß die Resonanzfrequenz nullter Ordnung ein maximales Signal nach Durchtritt des Ultraschalls durch den zu bestimmenden Körper ergibt (für die Resonanzfrequenz oder harmonische Frequenzen derselben ist der Prüfkörper besonders durchlässig). Um das Ändern der Frequenz bis zum Erreichen der Resonanzfrequenz zu vermeiden, wird in der US-PS 3 237 445 vorgeschlagen, gleichzeitig Ultraschall mit einer Vielzahl von Frequenzen auf den zu prüfenden Körper zu richten und nach Durchtritt des Körpers erneut die Frequenzen zu bestimmen. Da der Prüfkörper für die Resonanzfrequenz besonders durchlässig ist, wird Ultraschall mit der Resonanzfrequenz hervortreten, da diese Frequenz beim Durchtritt durch den Körper am wenigsten gedämpft worden ist.

Die GB-PS 842 241 befaßt sich mit Dickenbestimmungen durch Ultraschall, wobei ausgehend von der Beziehung f = V/2T vorgeschlagen wird, die Frequenz eines Oszillators über einen vorgegebenen Bereich des Frequenzspektrums zu ändern. Bei Frequenzen, bei welchen der Oszillator anspricht (harmonische Frequenz), wird die halbe Wellenlänge der harmonischen Schwingung ermittelt und mit Hilfe von gegeneinander verdrehbaren Skalen unmittelbar die Dicke des überprüften Werkstückes abgelesen. In der GB-PS 842 241 ist auch die Anwesenheit stehender Wellen bei Dickenbestimmungen auf Grund von Ultraschallmessungen erwähnt.

In der DE-AS 23 12 062 wird ein nach dem Ultraschall-Immersions-Resonanzverfahren arbeitendes Wanddickenmeßgerät angegeben, bei dem ein Ultraschallgeber über eine Koppelflüssigkeit akustisch an den Gegenstand, dessen Wanddicke gemessen werden soll, gekoppelt wird. Die Frequenz des Ultraschallgebers wird durch einen HF-Oszillator ständig moduliert, so daß sich in der Koppelflüssigkeit schnell nacheinander in vielen aufeinanderfolgenden Harmonischen kurzzeitig stehende Wellen ausbilden (vgl. hiezu insb. Sp. 7, Zeile 46 bis Sp. 8, Zeile 6 der DE-AS 23 12 062).

In der DE-AS 31 17 236 wird eine stehende Welle dazu herangezogen, um festzustellen, ob in einem zu überwachenden Raum ein Gegenstand anwesend ist und ob dieser Gegenstand in Bewegung ist. Dabei wird die Frequenz nicht geändert. Irgendwelche Entfernungsmessungen werden nicht durchgeführt, vielmehr ist davon auszugehen, daß der piezokeramische Schwinger, der die Wellenbewegung erzeugt, von der festzustellenden bzw. abzutastenden Vorlage in einem bestimmten Abstand angeordnet ist.

Bei dem in der DE-AS 21 44 472 angegebenen Verfahren zur Messung der Dicke von Metallteilen wird zwischen zwei Antennen eine stehende Welle erzeugt, wobei sich der Gegenstand, dessen Dicke zu messen ist, zwischen den Antennen befindet. Dabei wird ohne Änderung der Frequenz gearbeitet und auch nicht auf Grund der unterschiedlichen Wellenlängen von im Gegenstand, dessen Dicke zu messen ist, erzeugten stehenden Wellen auf die Abmessung des Gegenstandes geschlossen.

Aus dem Dokument Werkstoffprüfung mit Ultraschall, Springer 1980, J. und H. Krautkrämer, Seiten 265 bis 267, Kapitel 11. Laufzeitverfahren, ist es bekannt, daß man aus einer Messung der Frequenzdifferenz zweier aufeinanderfolgender Resonanzstellen der Platte und mit Hilfe der Formel

$$d = \frac{1}{2} \frac{c}{f_{n+1} - f_n}$$

die Dicke d einer Platte erhält, wobei c die Fortpflanzungsgeschwindigkeit der Welle in der Platte und $f_{n+1}$ und $f_n$ zwei benachbarte Resonanzfrequenzen sind.

Der vorliegenden Erfindung liegt die Aufgabe zugrunde, ein einfaches und genaues Verfahren zur Messung von Längen bzw. Abständen zwischen Endpunkten einer zu messenden Strecke anzugeben.

Erfindungsgemäß wird diese Aufgabe durch ein Verfahren mit den Merkmalen des Anspruches 1 gelöst.

Vorzugsweise werden beim erfindungsgemäßen Verfahren longitudinale Wellen verwendet.

In der Praxis kann dabei mit Vorteil so vorgegangen werden, daß man im Falle einer in einem einseitig geschlossenen, rohrförmigen Hohlraum enthaltenen Säule die stehende Welle vom offenen Ende des Hohlraums aus bzw. daß man im Fall einer in einem beidseitig offenen, rohrförmigen Hohlraum erhaltenen Säule die stehende Welle von einem offenen Ende des Hohlraums aus erzeugt.

Das erfindungsgemäße Meßverfahren ist den bekannten Meßverfahren, was seine Genauigkeit und die bei seiner Durchführung anfallenden Kosten betrifft, überlegen und kann ohne weiteres digitalisiert ausgeführt werden.

Die Erfindung betrifft weiters eine Vorrichtung zum Durchführen des erfindungsgemäßen Verfahrens zum Bestimmen der Länge einer Säule aus einem gasförmigen oder flüssigen Stoff und stellt sich die Aufgabe, eine einfach gebaute Vorrichtung zur Messung von Längen einer Flüssigkeits- oder Gassäule nach dem erfindungsgemäßen Verfahren anzugeben.

Erfindungsgemäß wird diese Aufgabe durch eine Vorrichtung mit den Merkmalen des Anspruches 11 gelöst.

Vorteilhafterweise kann man im Fall einer in einem beidseitig offenen Hohlraum enthaltenen stehenden Säule an dem Ende, an dem man die stehende Welle erzeugt, schallabsorbierendes Material anbringen, wodurch störende Reflexionen verhindert werden.

Bevorzugte Weiterbildungen der erfindungsgemäßen Vorrichtung sind Gegenstand der Ansprüche 12 bis 15.

Die Vorrichtung gemäß der Erfindung dient zur Ankoppelung der für die Längenmessung eines insbesondere rohrförmigen Hohlkörpers mittels Schallwellen benötigten Schallquelle an den Hohlkörper. Die Erregung der Gas- oder Luftsäule erfolgt so, daß die Ausbildung eindeutiger Resonanzen gewährleistet ist, damit eine Messung nach dem erfindungsgemäßen Verfahren einfach und genau erfolgen kann. Die Ankoppelung der Sendewelle erfolgt mit der erfindungsgemäßen Vorrichtung derart, daß die reflektierte Welle an der Eintrittsöffnung frei austreten kann. Daher kann es nicht zu Überlagerungen der einlaufenden Welle mit der reflektierten, stehenden Welle kommen. So sind zusätzliche Maxima oder Minima beim Empfangsmikrofon, die zu Fehlinterpretationen führen können, vermieden.

Weiters wird eine konstante Lautstärke (Schalldruck) der vom Tongenerator abgegebene Wellen gewährleistet, auch wenn die Frequenz/Wellenlänge bei Benutzung der erfindungsgemäßen Vorrichtung geändert wird, wenn zusätzlich im Resonanzraum des Lautsprechers der Schalldruck gemessen und über eine Regelschaltung rückgeführt und konstant gehalten wird.

Anwendungsgebiete des erfindungsgemäßen Verfahrens und der erfindungsgemäßen Vorrichtung sind das Messen von Pegelständen in der Hydrologie, aber auch von Füllständen in Tanks. Darüber hinaus kann die Erfindung zur Messung von manometrischen Druckschwankungen und zur Erfassung des Verbrauches eingesetzt werden. Die erfindungsgemäße Vorrichtung arbeitet weitgehend ohne mechanische Teile und die erhaltenen Meßwerte lassen sich sofort weiterverarbeiten, da sie bereits in digitaler Form vorliegen. Mit der Erfindung lassen sich Füllstände von Tanks jeglicher Flüssigkeiten, wie beispielsweise Öl oder Flüssiggas genau messen und aufzeigen.

Weitere Anwendungsgebiete für die Erfindung liegen in der Aerodynamik, in der Meteorologie und in der Vakuumtechnik, also überall dort, wo die Messung von manometrischen Flüssigkeitssäulen (z.B. Quecksilbersäulen) vorkommt.

Da das erfindungsgemäße Verfahren und die erfindungsgemäße Vorrichtung sehr genau arbeiten, bieten sie auch die Möglichkeit, die Menge einer aus einem Tank entnommenen Flüssigkeit durch Messen des alten und des neuen Pegelstandes zu bestimmen. Bei dieser Verwendung sind die bekannten, aufwendigen, mechanisch oder induktiv arbeitenden Durchflußmengenzähler entbehrlich.

Die Messung gemäß der Erfindung wird ausgeführt, indem am offenen bzw. einem offenen Ende des Rohres ein Schallerzeuger (Tongenerator) und daneben ein Schallaufnehmer (Mikrofon) angeordnet werden. Der Schallgeber gibt Schall mit z.B. bekannter Frequenz und damit bekannter Wellenlänger in das Rohr ab. Der Schallaufnehmer erfaßt fortlaufend die Tonstärke am offenen bzw. einem offenen Ende des Rohres.

Die bekannte Frequenz (oder Wellenlänge) des vom Schallgeber abgegebenen Schalls wird kontinuierlich (oder schrittweise) geändert, beispielsweise vergrößert. Dadurch treten im Bereich des Schallaufnehmers (Mikrofons) Schwankungen der Tonstärke auf. Die Tonstärke ist ein Maß für die Amplitude der stehenden Welle. Die Tonstärke wird immer dann ein Maximum erreichen, wenn sich ein Wellenbauch der vom Schallgeber im Rohr erzeugten, stehenden Schallwelle im Bereich des Schallaufnehmers (Mikrofons) befindet. Dies ist der Fall, wenn die konstante Rohrlänge ein Viertel, drei Viertel, fünf Viertel bzw. sieben Viertel usw. beim einseitig geschlossenen Rohr bzw. zwei Viertel, vier Viertel, sechs Viertel, acht Viertel usw. beim beidseitig offenen Rohr der vom Schallgeber jeweils abgegebenen Wellenlänge beträgt. Allgemein gilt, daß Wellenbäuche (Amplitudenmaxima) am offenen bzw. einem offenen Ende des Rohres auftreten, wenn die Rohrlänge (Länge der Gas- oder Flüssigkeitssäule oder aber die Länge des Stabes) ein ungeradzahliger Bruchteil beim einseitig geschlossenen Rohr bzw. ein geradzahliger Bruchteil beim beidseitig offenen Rohr der vierfachen Rohrlänge ist, oder umgekehrt ausgedrückt, wenn die Rohrlänge ein ungeradzahliges Vierfaches beim einseitig geschlossenen Rohr bzw. ein geradzahliger Vierfaches beim beidseitg offenen Rohr des Viertels der Wellenlänge ist.

Beim Meßverfahren gemäß der Erfindung werden durch Ändern der (bekannten) Frequenz des Schallerzeugers und durch Feststellung der Resonanzstärke zwei aufeinanderfolge Maxima der Wellenamplitude (Wellenbäuche) ermittelt. Es ist nicht notwendig, zu wissen, um das wievielte Maximum es sich handelt. Die gesuchte Länge der Mediumsäule wird bei bekannter Frequenz und bekannter Wellengeschwindigkeit der in der Mediumsäule erzeugten stehenden Welle nach der Gleichung

$$L = \frac{1}{2} \cdot \frac{c}{f_n - f_{n-1}} \quad (1)$$

berechnet. In Gleichung (1) bedeutet L die Länge der Mediumsäule (im genannten Beispiel den Pegelstand im Brunnenschacht), c die Wellengeschwindigkeit (im Beispiel die Schallgeschwindigkeit), $f_n$ die Frequenz des n-ten Maximums und $f_{n-1}$ die Frequenz des (n-1)-ten Maximums.

Unter Berücksichtigung der Schallgeschwindigkeit in Luft

$$c = 331,3 + 0,6 \, t \, (\text{Meter/sek})$$

kann die Gleichung (1) wie folgt umgeformt werden:

$$L = \frac{1}{2} \cdot \frac{331,3 + 0,6 \, t}{f_n - f_{n-1}} \quad (2)$$

In Gleichung (2) bedeutet t die Temperatur des zu messenden Mediums in °C.

Die Gleichung (1) leitet sich aus den beiden Beziehungen

(a)

$$L = [2n - 1] \frac{\lambda_n}{4} = \frac{2n - 1}{4} \cdot \frac{c}{f_n}$$

für das einseitig geschlossene Rohr bzw.

4

EP 0 379 855 B1

$$L = [2n - 1] \, 2 \frac{\lambda_n}{4} = \frac{2n-1}{2} \cdot \frac{c}{f_n}$$

für das beidseitig offene Rohr
für das n-te Maximum und
b)

$$L = [2(n-1)-1] \frac{\lambda_{n-1}}{4} = \frac{2n-3}{4} \cdot \frac{c}{f_{n-1}}$$

für das einseitig geschlossene Rohr bzw.

$$L = [2(n-1)-1] \, 2 \frac{\lambda_{n-1}}{4} = \frac{2n-3}{2} \cdot \frac{c}{f_{n-1}}$$

für das beidseitig offene Rohr
für das (n-1)-te Maximum ab.
Dabei bedeutet

$\lambda_n$ = Wellenlänge des n-ten Maximums
$f_n$ = Frequenz des n-ten Maximums
$\lambda_{n-1}$ = Wellenlänge des (n-1)-ten Maximums
$f_{n-1}$ = Frequenz des (n-1)-ten Maximums
$n$ = laufende Nummer des Maximums, sie fällt aus der Lösung heraus, muß also nicht bekannt sein
$c$ = Ausbreitungsgeschwindigkeit der Welle im Medium
$L$ = gesuchte Länge.

Bei der Ausführung des Verfahrens gemäß der Erfindung müssen nicht unbedingt zwei unmittelbar aufeinanderfolgende Maxima oder Minima ausgewertet werden. Vielmehr ist es möglich, auch Maxima oder Minima heranzuziehen, zwischen denen eine beliebige, aber bekannte Anzahl von Maxima bzw. Minima liegt.

Bei zwei nicht unmittelbar aufeinanderfolgenden Maxima errechnet sich die Länge L aus

$$L = \sigma \cdot \frac{1}{2} \cdot \frac{c}{f_u - f_n} \quad (3)$$

wobei

$\sigma$ = Anzahl der durchgelaufenen Wellenbäuche (abgesehen vom ersten)
$f_u$ = Frequenz des u-ten Maximums
$f_n$ = Frequenz des n-ten Maximums
$\lambda_u$ = Wellenlänge des u-ten Maximums
$\lambda_n$ = Wellenlänge des n-ten Maximums
$u$ = laufende Nummer des zuletzt registrierten Maximums
$n$ = laufende Nummer des als erstes registriertes Maximums

Weder n noch u müssen bekannt sein, jedoch muß die Differenz $\sigma$

$$\sigma = u - n$$

bekannt sein, d.h. bei der Messung gezählt werden, wobei u>n sein soll, d.h. bei der graduellen Erhöhung der Frequenz wird zuerst die n-te Frequenz, dann die (n+1)-te, die (n+2)-te usw. durchlaufen und schließlich die u-te Frequenz.

Setzt man für Luft als Ausbreitungsgeschwindigkeit der Schallwelle

$$c = 331{,}3 + 0{,}6 \, t,$$

erhält man

$$L = \sigma \cdot \frac{1}{2} \cdot \frac{331{,}3 + 0{,}6 \, t}{f_u - f_n} \quad (4)$$

Die Gleichung (3) errechnet sich aus den folgenden zwei Bedingungen:
letztes registriertes Maximum

$$L = (2u-1) \cdot \frac{\lambda_u}{4} = \frac{2u-1}{4} \cdot \frac{c}{f_u}$$

bzw.

$$L = (2u-1) \cdot \frac{2\lambda_u}{4} = \frac{2u-1}{2} \cdot \frac{c}{f_u}$$

erstes registriertes Maximum

$$L = (2n-1) \cdot \frac{\lambda_n}{4} = \frac{2n-1}{4} \cdot \frac{c}{f_n}$$

bzw.

$$L = (2n-1) \cdot \frac{2\lambda_n}{4} = \frac{2n-1}{2} \cdot \frac{c}{f_n}$$

5

Wenn die Wellenlänge und die Geschwindigkeit der Welle bekannt ist, kann die Länge nach der Gleichung

$$L = \sigma \cdot \frac{1}{2} \cdot \frac{\lambda_u \cdot \lambda_n}{\lambda_n - \lambda_u} \quad (5)$$

errechnet werden. In Gleichung (5) bedeutet L die Länge des Stabes oder der Säule, c die Fortpflanzungsgeschwindigkeit der Welle, $\lambda_n$ die Wellenlänge der stehenden Welle beim ersten festgestellten Maximum oder Minimum, $\lambda_u$ die Wellenlänge der stehenden Welle beim zuletzt festgestellten Maximum oder Minimum und $\sigma$ die Anzahl der festgestellten Maxima oder Minima ab dem n-ten bis zum u-ten Maximum oder Minimum.

Mit dem erfindungsgemäßen Verfahren bzw. der erfindungsgemäßen Vorrichtung kann auch das Füllen eines Tanks überwacht und gesteuert werden. Dabei wird zunächst der Pegelstand wie weiter oben beschrieben ermittelt. Dann wird bei diesmal konstanter Frequenz der in den Tank abgegebenen Welle der Tank gefüllt. Dabei wird die Zahl der Wellenbäuche erfaßt und, nachdem die der Differenz zwischen dem früher bestimmten Pegelstand und dem zu erreichenden Pegelstand entsprechende Anzahl der Wellenbäuche (oder Minima) festgestellt worden ist. das Füllen des Tanks abgebrochen.

Im übrigen hat sich herausgestellt, daß beim erfindungsgemäßen Verfahren bzw. der erfindungsgemäßen Vorrichtung das Empfangsmikrofon nicht genau am Ende der Säule angeordnet sein muß. Solange das Mikrofon nicht weiter als ein Achtel der Wellenlänge außerhalb oder innerhalb der Säule angeordnet ist, wird ein zutreffendes Ergebnis der Längenmessung erreicht.

Wenn in den Gleichungen (3) oder (5) $f_n$ größer als $f_u$ bzw. $\lambda_u$ größer als $\lambda_n$ ist, entspricht die Länge dem Absolutwert des Ergebnisses der Rechnung.

Wenn man nach dem erfindungsgemäßen Verfahren bzw. unter Verwendung der erfindungsgemäßen Vorrichtung die Länge eines Stabes aus einem festen Stoff so bestimmen will, daß sich am dem Schallgeber und dem Schallaufnehmer gegenüberliegenden Ende des Stabes ein Schwingungsknoten ausbildet, so muß der Stab mit seinem Ende, an dem der Knoten bzw. der Bauch der in ihm erzeugten, stehenden Welle liegen soll, gegen einen Körper aus einem akustisch härteren Werkstoff abgeschlossen sein, so daß die Welle im Stab am Ende desselben vorwiegend reflektiert wird.

Weitere Einzelheiten der Erfindung ergeben sich aus der nachstehenden Beschreibung, in der auf die angeschlossenen Zeichnungen Bezug genommen wird. In diesen zeigen

Fig. 1a und 1b schematisch verschiedene Fälle stehender Wellen in einer Säule,

Fig. 2 eine Prinzipskizze einer erfindungsgemäßen Vorrichtung,

Fig. 3 eine Ausführungsform der erfindungsgemäßen Vorrichtung, die auf ein teilweise mit einer Flüssigkeit gefülltes Rohr aufgesetzt ist,

Fig. 4 eine Einzelheit der Vorrichtung aus Fig. 3 in größerem Maßstab,

Fig. 5 ein Prinzipschaltschema einer für die erfindungsgemäße Vorrichtung verwendbaren Regeleinheit,

Fig. 6a und 6b Diagramme, in welchen die Abhängigkeit der Amplitude (A) von der Frequenz (f) für zwei verschiedene Fälle wiedergegeben ist und

Fig. 7 ein Diagramm, in dem die Schrittweite der Frequenzmeßpunkte eingezeichnet ist.

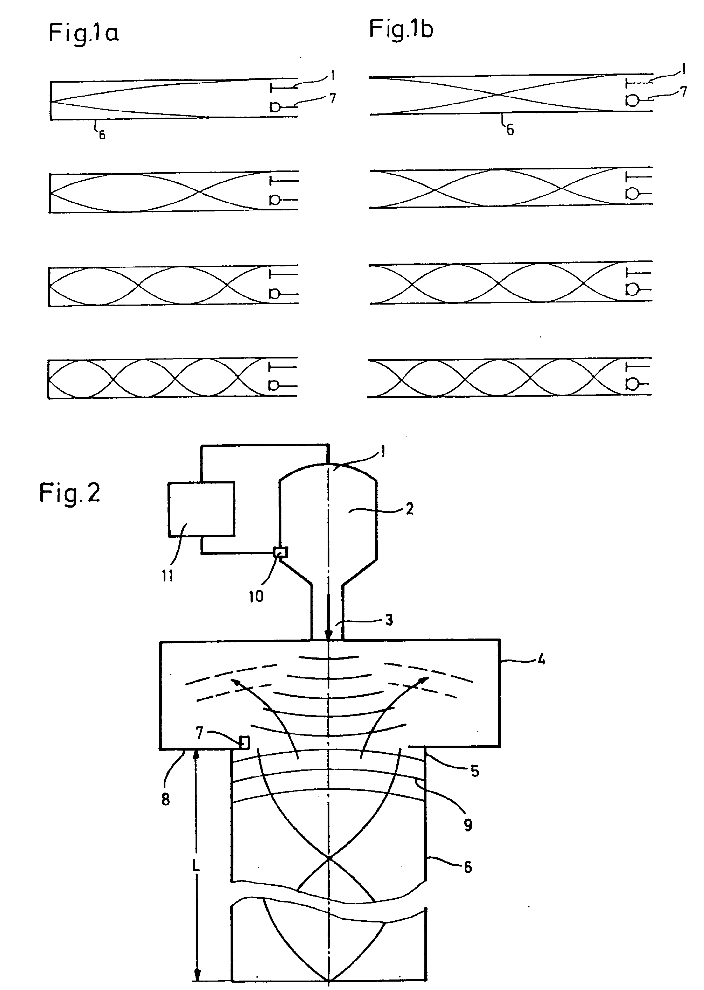

In Fig. 1a sind einige beispielsweise Fälle stehender Wellen in einem Rohr 6 mit der Länge L gezeigt, wobei dem offenen Rohrende ein Schallgeber (Tongenerator 1) und ein Schallnehmer (Mikrofon 7) zugeordnet ist. Für das erste in Fig. 1a gezeigte Beispiel gilt Wellenlänge $\lambda$ = 4 L, für das zweite Beispiel gilt Wellenlänge $\lambda$ =4/3 L, für das dritte Beispiel gilt Wellenlänge $\lambda$ = 4/5 L und für das vierte Beispiel gilt Wellenlänge $\lambda$ = 4/7 L.

Allgemein gilt:

$$\lambda_n = \frac{4}{2n - 1} \cdot L$$

Daraus leitet sich ab:

$$L = (2n - 1) \cdot \frac{\lambda_n}{4}$$

Wie Fig. 1a zeigt, ist in den gezeigten Fällen am Schallgeber 1 stets ein Schwingungsbauch und am festen (geschlossenen) Rohrende stets ein Schwingungsknoten.

In Fig. 1b sind einige beispielsweise Fälle stehender Wellen in einem beidseitig offenen Rohr 6 mit der Länge L gezeigt, wobei einem offenen Rohrende ein Schallgeber (Tongenerator 1) und ein Schallnehmer (Mikrofon 7) zugeordnet ist. Für das erste in Fig. 1b gezeigte Beispiel gilt Wellenlänge $\lambda$ = 4/2 L, für das zweite Beispiel gilt Wellenlänge $\lambda$ = 4/4 L, für das dritte Beispiel gilt Wellenlänge $\lambda$ = 4/6 L und für das vierte Beispiel gilt Wellenlänge $\lambda$ = 4/8 L.

Allgemein gilt: =

$$\lambda_n = \frac{2}{2n - 1} \cdot L$$

Daraus leitet sich ab:

$$L = (2n - 1) \cdot \frac{\lambda_n}{2}$$

Wie Fig. 1b zeigt, ist in den gezeigten Fällen sowohl am Schallgeber als auch am gegenüberliegenden offenen Rohrende stets ein Schwingungsbauch.

Die Schwingungsweite (Amplitude) und damit die Tonstärke am Mikrofon erreicht immer dann ein Maximum, wenn die vom Schallgeber abgestrahlte Wellenlänge ein ungeradzahliger Bruchteil der vierfachen Rohrlänge L ist, also 4/1, 4/3, 4/5, 4/7,..... usw. der Rohrlänge L, d.h. wenn die Rohrlänge 1/4, 3/4, 5/4, 7/4,... usw. der vom Schallgeber abgestrahlten Wellenlänge beträgt, also ein ungeradzahliges Vielfaches des Viertels der Wellenlänge ist (vgl. Fig. 1a).

Für Fig. 1b gilt Entsprechendes.

Die in Fig. 2 gezeigte Vorrichtung besitzt als Schallerzeuger einen Lautsprecher 1, der in einem Resonanzraum 2 mit verengter, rohrförmiger Schallaustrittsöffnung 3 eingebaut ist.

Das Gehäuse des Resonanzraumes 2 ist mit einem Abstand-halter 4 versehen, der am offenen Ende 5 des Rohres 6, dessen Länge L zu bestimmen ist, angelegt wird.

Am offenen Ende 5 des Rohres 6 wird weiters ein Schallaufnehmer angeordnet, der im Ausführungsbeispiel als Empfangsmikrofon 7 ausgeführt ist. Das Empfangsmikrofon 7 kann am an das Ende 5 des Rohres 6 angelegten Teil 8 des Abstandhalters 4 befestigt sein.

Der Abstandhalter 4 ist so ausgeführt, daß die Abstrahlung 9 der reflektierten Welle möglichst wenig behindert wird. Hiezu sind die Stege des Abstandhalters 4 quer zur Abstrahlung 9 schmal ausgebildet. Gegebenenfalls können die abgestrahlten Wellen 9 durch Dämm-Material zusätzlich abgeschwächt werden.

Im Resonanzraum 2, z.B. am Gehäuse desselben, ist ein Regler-Mikrofon 10 angeordnet. Dieses Regler-Mikrofon 10 ist über einen Regler 11 mit dem Lautsprecher 1 gekuppelt und steuert dessen Schallabgabe so, daß bei jeder Frequenz (Wellenlänge) im Resonanzraum 2 der gleiche Schalldruck vorliegt.

Das zur Ausführung des Verfahrens gemäß der Erfindung verwendete Gerät kann so programmiert werden, daß es teilweise oder vollständig selbsttätig arbeitet, so daß die Bedienungsperson bloß das Ergebnis, d.h. die gesuchte Länge ablesen muß.

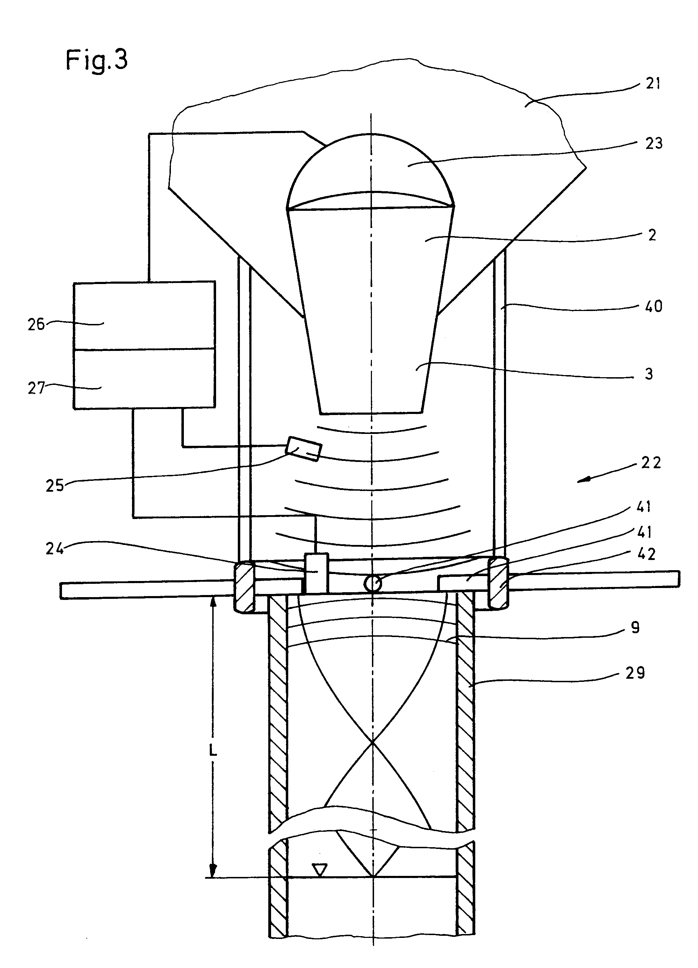

Die Vorrichtung gemäß Fig. 3 besteht aus einem Gehäuse 21, einem Abstandhalter 22 (bestehend aus Abstandsstützen 40, Auflagerstäben 41 und Haltering 42), einem Lautsprecher 23, einem Empfangsmikrofon 24, einem Regelmikrofon 25, einer Regeleinheit 26 und einem Sinusgenerator 27.

Die Form des Gehäuses 21 an der Schallaustrittsöffnung ist derart gewählt, daß die reflektierte Wellenfront 9 nicht mehr zurück in das Rohr 29 reflektiert werden kann. Auch hier kann zusätzlich Dämm-Material vorgesehen sein, um Reflexionen zu verhindern.

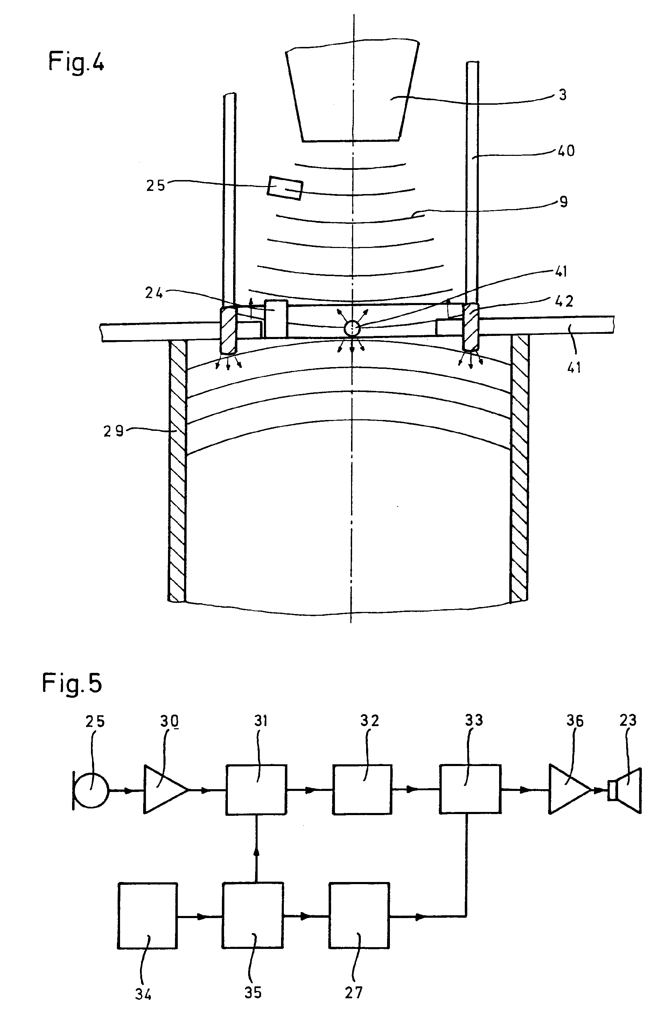

Der Abstandhalter 22 hat die Aufgabe, den Lautsprecher 23 im Abstand vom offenen Ende des Rohres 29 zu halten und das Empfangsmikrofon 24 an der Rohröffnung zu placieren. Die Teile des Abstandhalters 22, insbesonder dessen Auflagestäbe 41, sind so ausgeführt, daß in der abgestrahlten und reflektierten Wellenfront 9 möglichst keine störenden Reflexionen (in Fig. 4 durch Pfeile angedeutet) entstehen. Als vorteilhafte Formen haben sich Rundstäbe und Ringe mit runden Endflächen erwiesen, wie dies in Einzelheiten auch in Fig. 4 gezeigt ist.

Die Regeleinheit 26 besteht aus dem Regelmikrofon 25, einem Vorverstärker 30, einem digitalen Filter 31, dessen Durchlaßfrequenz mit der Sendefrequenz mitgeführt wird, einem Gleichrichter 32, einem Amplitudenmodulator 33, Endverstärker 36, einem Quarzoszillator 34, einem Frequenzvervielfacher 35, der auch das Filter 31 taktet, und einem Rechteck-Sinus-Konverter 27. Das Blockschaltbild der Regeleinheit ist in Fig. 5 dargestellt.

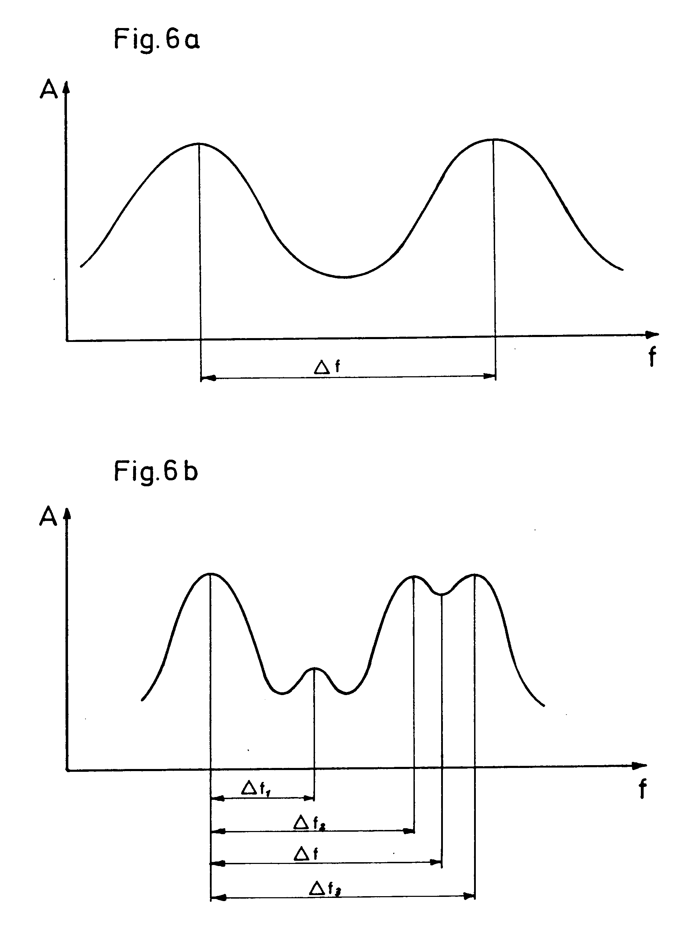

In Fig. 6a ist die Amplitude A der stehenden Welle am offenen bzw. einem offenen Ende des Rohres (6 bzw. 29) in Abhängigkeit von der Frequenz f dargestellt. Die Genauigkeit der Messung ist von der Genauigkeit des Erkennens der Maxima oder Minima abhängig. Die in Fig. 6a dargestellten Maxima sind eindeutig meßbar und liefern daher ein genaues Ergebnis. Die Genauigkeit hängt auch noch direkt von der Anzahl der Maxima oder Minima im Meßbereich ab. Je mehr Maxima oder Minima gemessen werden, desto kleiner wird die Bedeutung des prozentualen Fehlers, der bei der Maxima- bzw. Minimaerkennung auftritt.

In Abb. 6b ist ein Fall dargestellt, in dem die Amplitude A durch zusätzliche Reflexionen beeinträchtigt ist. Das Maximum nach $\Delta f1$ entsteht, wenn Reflexionen auftreten, die eine Lautstärkenerhöhung verursachen. Die Lautstärkenabsenkung nach $\Delta f$ kann durch eine Reflexion mit dem Gehäuse oder durch die unsachgemäße Ankoppelung entstehen.

Mit der erfindungsgemäßen Vorrichtung kann ein hohes Maß an Genauigkeit und Meßsicherheit erreicht werden. Hiefür sind u.a. günstig:

a) Die Ausführung des Gehäuses und des Abstandhalters sind so gestaltet, daß möglichst keine zusätzlichen Reflexionen entstehen (Fig. 3, Fig. 4). Gegebenenfalls ist bei der Messung beidseitig offener Rohre zusätzlich Dämm-Material anzubringen.

7

b) Der Einkoppelungspegel der Sendewelle wird über den gesamten Frequenzbereich konstant gehalten.

c) Die größte Empfindlichkeit des Regel- und des Empfangsmikrofons wird mit der Sendefrequenz mitgeführt, um Umgebungsgeräusche auszuschalten.

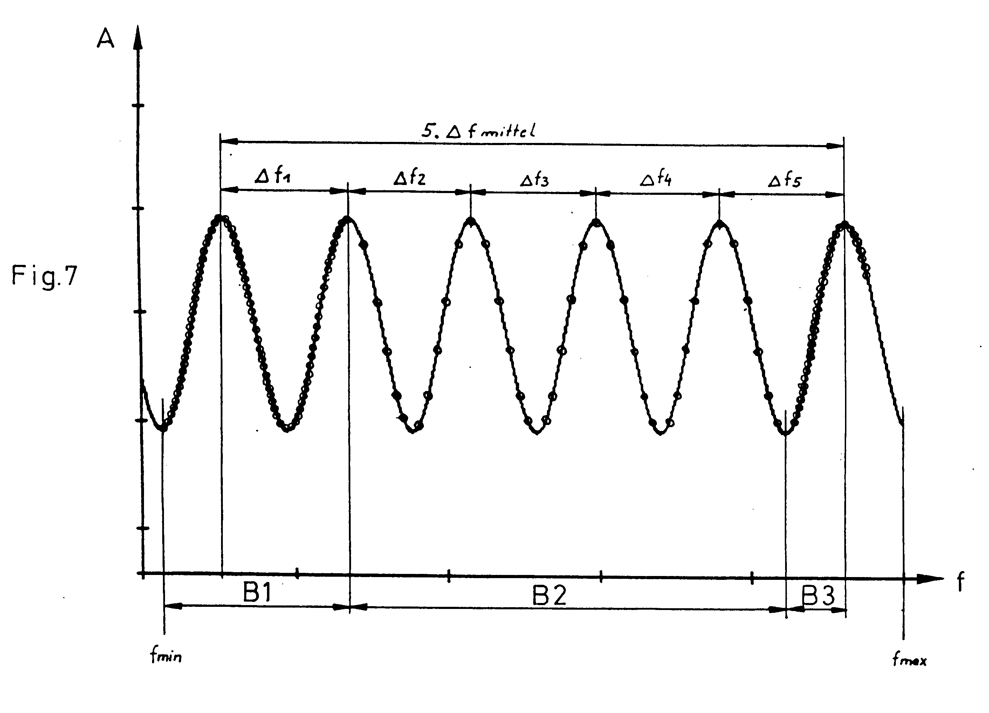

In Fig. 7 ist die Amplitude A der stehenden Welle am bzw. an einem offenen Ende des Rohres (6 bzw. 29) in Abhängigkeit von der Frequenz f dargestellt. In den Anfangs- und Endbereichen B1 und B3 ist die Meßfrequenzschrittweite deutlich kleiner als im Mittelbereich B2. Dadurch kann der Abstand $\Delta f_1$ zwischen dem ersten und dem zweiten Maximum sowie das sechste Maximum genauer festgestellt werden und die Messung wird dadurch insgesamt genauer.

Das erfindungsgemäße Verfahren kann folgendermaßen hinsichtlich Genauigkeit und Meßzeit optimiert werden. Die Aufgabe besteht darin, unter allen Bedingungen den mittleren Abstand $\Delta f$ (Fig. 6a) zwischen aufeinanderfolgenden Maxima bzw. Minima zuverlässig zu bestimmen.

Mit Bezug auf die Fig. 7 kann das erfindungsgemäße Verfahren wie folgt durchgeführt werden:

a) Bestimmung der maximalen Meßfrequenz

Die Wellenlänge bei der maximalen Frequenz muß groß gegen den Durchmesser des Rohres sein, da sich sonst keine stehende Welle im Rohr ausbildet.

b) Bestimmung der Meßfrequenzschrittweite dF

Festlegung durch die größte zu messende Länge. Bei dieser Länge tritt zwischen den Schwebungsmaxima bzw. -minima die minimale Frequenzdifferenz auf. Um eine gute Auswertbarkeit zu erzielen, sollen mindestens 12 Frequenzpunkte zwischen zwei Maxima bzw. Minima gemessen werden.

$$dF \leqq \frac{c}{2Lmax} \cdot \frac{1}{12} \ ( = \text{minimale Frequenzdifferenz})$$

c) Abwarten des Einschwingens

Zwischen dem Einstellen der Frequenz und Abfrage des Schallpegels muß mindestens solange gewartet werden, bis die am Rohrende reflektierte Welle wieder am Eingang angelangt ist, d.h. die Wartezeit beträgt:

$$dt \geqq \frac{2Lmax}{c}$$

d) Tiefste Frequenz zum Beginn der Messungen

Die minimale Frequenz, bei der noch ein Extremum auftreten kann, beträgt:

$$f_{min} = \frac{c}{4Lmin}$$

es hat daher keinen Sinn, die Messung wesentlich unterhalb dieser Frequenz zu beginnen.

e) Ablauf der Messung

. Beginn bei der tiefsten Frequenz mit minimaler Schrittweite dF und der größten Wartezeit dt.

. Erhöhung der Frequenz in Schritten dF bis zum Auftreten des ersten und zweiten Minimums bzw. Maximums.

. Aus der Frequenzdifferenz der beiden Minima/Maxima kann eine erste Abschätzung der Rohrlänge erfolgen, und damit können die notwendige Wartezeit und Schrittlänge an die zu erwartende Rohrlänge angepaßt werden, d.h. es wird nun:

I: Die Wartezeit auf Grund der zunächst grob vorhersagbaren Rohrlänge auf den jeweils kürzestmöglichen Wert eingestellt und

II: dF dahingehend vergrößert, daß möglichst wenige aber $\geqq 12$ Meßpunkte zwischen 2 aufeinanderfolgenden Maxima bzw. Minima liegen.

III: Die notwendige Anzahl von zu erkennenden Maxima bzw. Minima hängt einerseits von der geforderten Meßgenauigkeit und anderseits von der zur Verfügung stehenden Meßzeit ab. Zur Erzielung der größten Genauigkeit müssen so viele Maxima bzw. Minima (innerhalb des zulässigen Meßbereiches lt. I und II) wie möglich erfaßt werden. Sind die Meßzeiten begrenzt oder die Genauigkeitsanforderungen nicht so hoch, so kann die Anzahl der zu erfassenden Minima bzw. Maxima reduziert werden, bis zum theoretischen Grenzwert von 2 aufeinanderfolgenden Maxima bzw. Minima.

IV: Da die Genauigkeit der Messung direkt von der Genauigkeit der Bestimmung der Größe $\Delta f$ abhängt, ist es vorteilhaft, gegen Ende des Meßintervalls wieder auf die minimale Schrittweite der Frequenzänderung dF wie zu Beginn der Messung zurückzuschalten (s. Abb. 7).

V: Der Meßvorgang kann auch bei der höchsten Frequenz begonnen und mit schrittweiser Absenkung der Frequenz durchgeführt werden. Alle Ausführungen sind dann entsprechend anzupassen.


**Patentansprüche**

1. Verfahren zum berührungsfreien Bestimmen der Länge einer Säule aus einem flüssigen oder gasförmigen Stoff, die in einem einseitig geschlossenen oder beidseitig offenen, rohrförmigen Hohlraum (6, 29) enthalten ist, oder eines Stabes aus einem festen Stoff, bei dem man in der Säule oder im Stab eine stehende Schallwelle mit bekannter Fortpflanzungsgeschwindigkeit und mit bekannter Frequenz oder bekannter Wellenlänge erzeugt, von welcher stehenden Welle ein Knoten an einem Ende des Stabes oder der Säule, insbesondere am dem offenen Ende (5) des Hohlraums (6, 29) gegenüberliegenden, geschlossenen Ende liegt bzw. ein Bauch an einem der beiden offenen Enden des Hohlraums liegt, und bei dem die Frequenz der stehenden Welle geändert wird, wobei man die Frequenz der Schallwelle so lange ändert, bis wenigstens zwei aufeinanderfolgende Maxima, zwei aufeinanderfolgende Minima oder ein auf ein Maximum folgendes Minimum der Schallwelle erfaßt werden, und die Länge des Stabes oder der Säule bei bekannter Frequenz f der stehenden Schallwelle unter Verwendung der Beziehung

$$L = \sigma \cdot \frac{1}{2} \cdot \frac{c}{f_u - f_n} \quad , (3)$$

in der L die Länge des Stabes oder der Säule, c die Fortpflanzungsgeschwindigkeit der Welle, $f_n$ die Frequenz der stehenden Welle beim ersten festgestellten Maximum oder Minimum, $f_u$ die Frequenz der stehenden Welle beim zuletzt festgestellten Maximum oder Minimum und $\sigma$ die Anzahl der festgestellten Maxima oder Minima ab dem n-ten bis zum u-ten Maximum oder Minimum ist, oder bei bekannter Wellenlänge $\lambda$ unter Verwendung der Beziehung

$$L = \sigma \cdot \frac{1}{2} \cdot \frac{\lambda_u \cdot \lambda_n}{\lambda_n - \lambda_u} \quad , (5)$$

in der L die Länge des Stabes oder der Säule, c die Fortpflanzungsgeschwindigkeit der Welle, $\lambda_n$ die Wellenlänge der stehenden Welle beim ersten festgestellten Maximum oder Minimum, $\lambda_u$ die Wellenlänge der stehenden Welle beim zuletzt festgestellten Maximum oder Minimum und $\sigma$ die Anzahl der festgestellten Maxima oder Minima ab dem n-ten bis zum u-ten Maximum oder Minimum ist, berechnet, wobei man zum Erzeugen der stehenden Welle einen Lautsprucher (1) und zum Bestimmen der Amplitude der stehenden Schallwelle einen Schallaufnehmer (7, 24), beispielsweise ein Mikrofon (7, 24) verwendet, wobei man die Amplitude der stehenden Welle an dem Ende (5) der Säule oder des Stabes erfaßt, an dem die Welle eingespeist wird, wobei man die Schallwelle in einem von einem Gehäuse begrenzten Resonanzraum (2), der am Ende (5) der Säule oder des Stabes angeordnet wird, erzeugt, wobei man den Schalldruck im Resonanzraum (2) durch ein Regler-Mikrofon (10) oder den Schalldruck im Bereich vor der Schallaustrittsöffnung (3) des Resonanzraumes (2) durch ein Regler-Mikrofon (25) erfaßt, und wobei man den die Schallwelle im Resonanzraum (2) erzeugenden Lautsprecher (1) in Abhängigkeit vom erfaßten Schalldruck über einen Regler (11; 26, 27) so regelt, daß der Schalldruck der vom Lantsprucher (1) erzeugten Schallwelle bei sich ändernder Frequenz konstant gehalten wird.

2. Verfahren nach Anspruch 1, dadurch gekennzeichnet, daß man im Falle einer in einem einseitig geschlossenen, rohrförmigen Hohlraum enthaltenen Säule die stehende Welle vom offenen Ende (5) des Hohlraums (6, 29) aus bzw. daß man im Fall einer in einem beideitig offenen, rohrförmigen Hohlraum erhaltenen Säule die stehende Welle von einem offenen Ende des Hohlraums aus erzeugt.

3. Verfahren nach Anspruch 1 oder 2, dadurch gekennzeichnet, daß die Wellenlänge $\lambda$ der Schallwellen mit der maximalen verwendeten Frequenz $f_{max}$ größer ist als die Querabmessung des zu messenden Hohlraums (6, 29).

4. Verfahren nach einem der Ansprüche 1 bis 3, dadurch gekennzeichnet, daß die minimale Meßfrequenzschrittweite dF nach der Beziehung

$$dF \leqq \frac{c}{2L_{max}} \cdot \frac{1}{k} ,$$

in der c die Fortpflanzungsgeschwindigkeit der Schallwelle, k die Anzahl der Frequenzmeßpunkte zwischen zwei Maxima oder Minima, die vorzugsweise gleich oder größer als zwölf ist, und $L_{max}$ die maximale Länge der zu messenden Mediumsäule ist, bestimmt wird.

**5.** Verfahren nach einem der Ansprüche 1 bis 4, dadurch gekennzeichnet, daß die minimale Wartezeit dt zwischen dem Absenden und dem Messen der Schallwelle nach der Beziehung

$$dt \geqq \frac{2L_{max}}{c},$$

in der $L_{max}$ die maximale Länge der zu messenden Mediumsäule und c die Fortpflanzungsgeschwindigkeit der Welle ist, bestimmt wird.

**6.** Verfahren nach einem der Ansprüche 1 bis 5, dadurch gekennzeichnet, daß die minimale Frequenz ($f_{min}$), bei der noch ein Maximum oder Minimum auftreten kann, nach der Beziehung

$$f_{min} = \frac{c}{4L_{min}}$$

in der c die Fortpflanzungsgeschwindigkeit der Schallwelle und $L_{min}$ die kleinste Länge der zu messenden Mediumsäule ist, bestimmt wird.

**7.** Verfahren nach Anspruch 6, gekennzeichnet durch die Schritte:
   a) Beginn der Messung bei der kleinsten Frequenz $f_{min}$ mit minimaler Schrittweite dF und größter Wartezeit dt,
   b) Erhöhung der Frequenz f in Schritten dF bis zum Auftreten des ersten und zweiten Minimums bzw. Maximums,
   c) Abschätzen der Rohrlänge (L) aus der Frequenzdifferenz zwischen den beiden Minima bzw. Maxima und Anpassen der Wartezeit dt und der Schrittweite dF, wobei die Wartezeit dt auf den kürzestmöglichen Wert und die Schrittweite dF auf den größtmöglichen Wert eingestellt wird und
   d) Messen so vieler Maxima oder Minima, wie für die gewünschte Genauigkeit der Messung erforderlich.

**8.** Verfahren nach Anspruch 7, dadurch gekennzeichnet, daß gegen Ende des Meßintervalls auf die minimale Schrittweite wie zu Beginn der Messung zurückgeschaltet wird.

**9.** Verfahren nach Anspruch 7 oder 8, dadurch gekennzeichnet, daß die Messung bei der höchsten Frequenz $f_{max}$ begonnen wird und die Meßfrequenz f schrittweise abgesenkt wird.

**10.** Verfahren nach einem der Ansprüche 1 bis 9, dadurch gekennzeichnet, daß man im Fall einer in einem beidseitig offenen Hohlraum (6, 29) enthaltenen Säule an dem Ende, an dem man die stehende Welle erzeugt, schallabsorbierendes Material anbringt.

**11.** Vorrichtung zum Durchführen des Verfahrens nach einem der Ansprüche 1 bis 10 zum Bestimmen der Länge einer Säule aus einem gasförmigen oder flüssigen Stoff, dadurch gekennzeichnet, daß ein Lautsprecher (1) mit einem Abstandhalter (4, 22) verbunden ist, dessen dem Lautsprecher (1) gegenüberliegendes Ende (8) am offenen Ende (5) bzw. an einem offenen Ende des die Säule aus dem gasförmigen oder flüssigen Stoff enthaltenden rohrförmigen Hohlraums (6, 29) anlegbar ist, daß als Schallaufnehmer ein Empfangsmikrofon (7, 24) vorgesehen ist, daß der Lautsprecher (1, 23) in einem von einem Gehäuse (21) begrenzten Resonanzraum (2) angeordnet ist, daß das Gehäuse (21) des Resonanzraumes (2) eine verengte, rohrförmige, auf das offene bzw. ein offenes Ende (5) des Hohlraumes (6, 29) hin gerichtete Schallaustrittsöffnung (3) aufweist, daß der Lautsprecher (1, 23) über einen Regler (11; 26, 27) mit einem den Schalldruck im Resonanzraum (2) erfassenden Regler-Mikrofon (10) oder mit einem den Schalldruck der Schallwelle im Bereich vor der Schallaustrittsöffnung (3) des Resonanzraumes (2) erfassenden Regler-Mikrofon (25) verbunden ist und daß der Regler (11; 26, 27) den Lautsprecher (1, 23) so regelt, daß der Schalldruck der vom Lautsprecher (1, 23) erzeugten Schallwelle bei sich ändernder Frequenz konstant gehalten ist.

**12.** Vorrichtung nach Anspruch 11, dadurch gekennzeichnet, daß die größte Empfindlichkeit des Empfangsmikrofons (7, 24) veränderbar ist und daß eine Einrichtung vorgesehen ist, mit der die größte Empfindlichkeit des Empfangsmikrofons (7, 24) an die Frequenz der vom Lautsprecher (1, 23) abgegebenen Sendewelle anpaßbar ist.

**13.** Vorrichtung nach Anspruch 11 oder 12, dadurch gekennzeichnet, daß der Abstandhalter (22) einen Ring (42) aufweist, der über Stäbe (40) mit dem Gehäuse (21) des Resonanzraumes (2) verbunden ist, und der Auflagestäbe (41) aufweist, die radial in das Innere des Ringes (42) ragen und über den Ring (42) nach außen vorstehen.

**14.** Vorrichtung nach einem der Ansprüche 11 bis 13, dadurch gekennzeichnet, daß die rohrförmige Schallaustrittsöffnung (3) sich zu ihrem freien Ende hin konisch verjüngend ausgebildet ist.

**15.** Vorrichtung nach einem der Ansprüche 11 bis 14, dadurch gekennzeichnet, daß die dem offenen Ende des Hohlraumes (6, 29) zugekehrten Flächen des Abstandhalters (4, 22), insbesondere seiner Stäbe (41) und seines Ringes (42), konvex gekrümmt sind.

## Claims

**1.** Method for non-contactual determination of the length of a column of a liquid or gaseous material contained in a tubular hollow space (6, 29) which is closed at one end or open at both ends, or of a rod of a solid material, in which a standing sound wave of known propagation speed and at a known frequency or at a known wavelength is generated in the column or in the rod, a nodal point of said standing wave being located at one end of the rod or of the column, more particularly at the closed end lying opposite the open end (5) of the hollow space (6, 29), or an antinode being located at one of the two open ends of the hollow space, and in which the frequency of the standing wave is altered, the frequency of the sound wave being altered until at least two successive maxima, two successive minima or a minimum succeeding a maximum of the the sound wave are detected, and the length of the rod or of the column is calculated, at a known frequency f of the standing sound wave, using the equation:

$$L = \sigma \cdot \frac{1}{2} \cdot \frac{c}{f_u - f_n} \quad (3),$$

in which L is the length of the rod or of the column, c the propagation speed of the wave, $f_n$ the frequency of the standing wave at the first ascertained maximum or minimum, $f_u$ the frequency of the standing wave at the last ascertained maximum or minimum, and $\sigma$ the number of ascertained maxima or minima from the nth to the uth maximum or minimum, or at a known wavelength $\lambda$, using the equation:

$$L = \sigma \cdot \frac{1}{2} \cdot \frac{\lambda_u \cdot \lambda_n}{\lambda_n - \lambda_u} \quad (5)$$

in which L is the length of the rod or of the column, c the propagation speed of the wave, $\lambda_1$ the wavelength of the standing wave at the first ascertained maximum or minimum, $\lambda_u$ the wavelength of the standing wave at the last ascertained maximum or minimum, and $\sigma$ the number of ascertained maxima or minima from the nth to the uth maximum or minimum, a loudspeaker (1) being used to generate the standing wave, and a sound receiver (7, 24), e.g. a microphone (7, 24), being used to determine the amplitude of the standing sound wave, the amplitude of the standing wave being detected at the end (5) of the column or of the rod at which the wave is fed in, the sound wave being disposed in a resonator space (2) defined by a casing disposed at the end (5) of the column or of the rod, the acoustic pressure in the resonator space (2) being detected by a controller microphone (10), or the acoustic pressure in the area in front of the sound outlet opening (3) of the resonator space (2) by a controller microphone (25), and the loudspeaker (1) generating the sound wave in the resonator space (2) being regulated in dependence on the detected acoustic pressure via a regulator (11; 26, 27), in such a way that the acoustic pressure of the sound wave generated by the loudspeaker (1) is kept constant during alterations in frequency.

**2.** Method according to claim 1, characterised in that, in the case of a column contained in a tubular hollow space closed at one end, the standing wave is generated from the open end (5) of the hollow space (6, 29) or, in the case of a tubular hollow space open at both ends, the standing wave is generated at an open end of the hollow space.

**3.** Method according to claim 1 or 2, characterised in that the wavelength $\lambda$ of the sound waves with the maximum frequency $f_{max}$ used, is greater than the transverse dimension of the hollow space (6, 29) to be measured.

**4.** Method according to one of claims 1 to 3, characterised in that the minimum measurement frequency step width dF is determined according to the equation:

$$dF \leqq \frac{c}{2L_{max}} \cdot \frac{1}{k}$$

in which c is the propagation speed of the sound wave, k the number of frequency measurement points between two maxima or minima, which is preferably equal to or greater than twelve, and $L_{max}$ is the maximum length of the column of medium to be measured.

5. Method according to one of claims 1 to 4, characterised in that the minimum delay time dt between transmission and measurement of the sound wave is determined according to the equation:

$$dt \leqq \frac{2L_{max}}{c}$$

in which $L_{max}$ is the maximum length of the column of medium to be measured, and c the propagation speed of the wave.

6. Method according to one of claims 1 to 5, characterised in that the minimum frequency ($f_{min}$) at which a maximum or a minimum can still occur, is determined by the equation:

$$f_{min} = \frac{c}{4L_{min}}$$

in which c is the propagation speed of the sound wave and $L_{min}$ the smallest length of the column of medium to be measured.

7. Method according to claim 6, characterised by the following stages:
a) Start of measurement of the smallest frequency $f_{min}$ with minimum step width dF and greatest delay time dt,
b) increase in frequency f in steps dF until occurrence of the first and second minimum or maximum,
c) estimation of the tube length (L) from the frequency difference between the two minima or maxima, and adaptation of the delay time dt and of the step width dF, the delay time dt being set to the shortest possible value, and the step width dF to the greatest possible value, and
d) measurement of as many maxima or minima as are necessary for the desired precision of the measurement.

8. Method according to claim 7, characterised in that, towards the end of the measurement interval, the installation is switched back to the minimum step width, as at the beginning of measurement.

9. Method according to claim 7 or 8, characterised in that measurement is begun at the highest frequency $f_{max}$, and the measurement frequency f is progressively lowered.

10. Method according to one of claims 1 to 9, characterised in that, in the case of a column contained in a hollow space (6, 29) open at both ends, sound-insulating material is applied at the end at which the standing wave is generated.

11. Device for carrying out the method according to one of claims 1 to 10 for determining the length of a column of gaseous or liquid material, characterised in that a loudspeaker (1) is connected to a spacer (4, 22), the end (8) of said spacer (4,22) lying opposite the loudspeaker (1) being capable of being applied against the open end (5), or an open end, of the tubular hollow space (6, 29) containing the column of gaseous or liquid material, in that a receiver microphone (7, 24) is provided as a sound receiver, in that the loudspeaker (1, 23) is disposed in a resonator space (2) defined by a casing (21), in that the casing (21) of the resonator space (2) has a constricted, tubular sound outlet opening (3) directed towards the open or an open end (5) of the hollow space (6, 29), in that the loudspeaker (1, 23) is connected via a regulator (11; 26, 27) to a controller microphone (10) detecting the acoustic pressure in the resonator space (2), or to a controller microphone (25) detecting the acoustic pressure of the sound wave in the area in front of the sound outlet opening (3) of the resonator space (2), and in that the regulator (11; 26, 27) controls the loudspeaker (1, 23) in such a way that the acoustic pressure of the sound wave generated by the loudspeaker (1, 23) is kept constant during alterations in frequency.

12. Device according to claim 11, characterised in that the greatest sensitivity of the receiver microphone (7, 24) is alterable, and in that a device is provided by means of which the greatest sensitivity of the receiver microphone (7, 24) may be adapted to the frequency of the transmission wave emitted by the loudspeaker (1, 23).

13. Device according to claim 11 or 12, characterised in that the spacer (22) has a ring (42) connected by rods (40) to the casing (21) of the resonator space (2), and which has support rods (41), which project radially into the interior of the ring (42), and outwardly beyond the ring (42).

14. Device according to one of claims 11 to 13, characterised in that the tubular sound outlet opening (3) is formed to taper conically towards its free end.

15. Device according to one of claims 11 to 14, characterised in that the surfaces of the spacer (4, 22) facing the open end of the hollow space (6, 29), in particular of its rods (41) and of its ring (42), have a convex curvature.


**Revendications**

1. Procédé pour déterminer sans contact la longueur d'une colonne d'une matière liquide ou gazeuse qui est contenue dans une cavité tubulaire (6, 29) fermée d'un côté ou ouverte des deux côtés, ou pour déterminer sans contact la longueur d'une barre de matière solide, procédé dans lequel on produit dans la colonne ou dans la barre une onde acoustique stationnaire avec vitesse de propagation et fréquence ou longueur d'onde connues, un noeud de cette onde stationnaire se trouvant à une extrémité de la barre ou de la colonne, notamment à l'extrémité fermée, située à l'opposé de l'extrémité ouverte (5) de la cavité (6, 29), ou un ventre se trouvant à l'une des deux extrémités ouvertes de la cavité, dans lequel on modifie la fréquence de l'onde stationnaire jusqu'à ce que l'on capte au moins deux maxima successifs, deux minima successifs ou un minimum succédant à un maximum de l'onde acoustique, et l'on calcule la longueur de la barre ou de la colonne, pour une fréquence f connue de l'onde acoustique stationnaire, en utilisant la relation

$$L \; = \; \sigma \cdot \frac{1}{2} \cdot \frac{c}{f_u - f_n} \quad (3),$$

dans laquelle L est la longueur de la barre ou de la colonne, c la vitesse de propagation de l'onde, $f_n$ la fréquence de l'onde stationnaire lors du premier maximum ou minimum constaté, $f_u$ la fréquence de l'onde stationnaire lors du dernier maximum ou minimum constaté et $\sigma$ le nombre des maxima ou minima constatés à partir du n-ième jusqu'au u-ième maximum ou minimum, ou bien, si l'on connaît la longueur d'onde $\lambda$, en utilisant la relation

$$L \; = \; \sigma \cdot \frac{1}{2} \cdot \frac{\lambda_u \cdot \lambda_n}{\lambda_n - \lambda_u} \quad (5)$$

dans laquelle L est la longueur de la barre ou de la colonne, c la vitesse de propagation de l'onde, $\lambda_n$ la longueur d'onde de l'onde stationnaire lors du premier maximum ou minimum constaté, $\lambda_u$ la longueur d'onde de l'onde stationnaire lors du dernier maximum ou minimum constaté, et $\sigma$ le nombre des maxima ou minima constatés à partir du n-ième jusqu'au u-ième maximum ou minimum, procédé dans lequel on utilise un haut-parleur (1) pour produire l'onde stationnaire, et un capteur acoustique (7, 24), par exemple un microphone (7, 24) pour déterminer l'amplitude de l'onde stationnaire, on détermine l'amplitude de l'onde stationnaire à l'extrémité (5), de la colonne ou de la barre, à laquelle on fournit l'onde, on produit l'onde acoustique dans une chambre de résonance (2) délimitée par une enceinte et disposée à l'extrémité (5) de la colonne ou de la barre, on capte, par un microphone-régulateur (10), la pression acoustique dans la chambre de résonance (2), ou, par un microphone-régulateur (25), la pression acoustique dans la région de l'ouverture de sortie acoustique (3) de la chambre de résonance (2) et, par l'intermédiaire d'un régulateur (11; 26, 27), on régule, en fonction de la pression acoustique captée, le haut-parleur (1) produisant l'onde acoustique dans la chambre de résonance (2), de manière telle que la pression acoustique de l'onde acoustique produite par le haut-parleur (1) soit maintenue constante lorsque la fréquence varie.

2. Procédé selon revendication 1, caractérisé par le fait que, dans le cas d'une colonne contenue dans une cavité tubulaire fermée d'un côté, on produit l'onde stationnaire depuis l'extrémité ouverte (5) de la cavité (6, 29), ou encore, dans le cas d'une colonne contenue dans une cavité tubulaire ouverte des deux côtés, on produit l'onde stationnaire depuis une extrémité ouverte de la cavité.

3. Procédé selon revendication 1 ou 2, caractérisé par le fait que la longueur d'onde $\lambda$ des ondes acoustiques ayant la fréquence maximale $f_{max}$ utilisée est plus grande que la dimension transversale de la cavité à mesurer (6, 29).

**4.** Procédé selon l'une des revendications 1 à 3, caractérisé par le fait que la largeur de pas minimale dF de la fréquence de mesure est déterminée d'après la relation

$$dF \leqq \frac{c}{2L_{max}} \cdot \frac{1}{k},$$

dans laquelle c est la vitesse de propagation de l'onde acoustique, k le nombre des points de mesure de fréquence entre deux maxima ou minima, lequel est de préférence égal ou supérieur à 12, et $L_{max}$ la longueur maximale de la colonne de fluide à mesurer.

**5.** Procédé selon l'une des revendications 1 à 4, caractérisé par le fait que le temps d'attente minimal dt entre l'émission et la mesure de l'onde acoustique est déterminé d'après la relation

$$dt \geqq \frac{2L_{max}}{c}$$

dans laquelle $L_{max}$ est la longueur maximale de la colonne de fluide à mesurer et c est la vitesse de propagation de l'onde.

**6.** Procédé selon l'une des revendications 1 à 5, caractérisé par le fait que la fréquence minimale ($f_{min}$) pour laquelle il peut encore y avoir un maximum ou minimum est déterminée d'après la relation

$$f_{min} = \frac{c}{4L_{min}}$$

dans laquelle c est la vitesse de propagation de l'onde acoustique et $L_{min}$ est la plus petite longueur de la colonne de fluide à mesurer.

**7.** Procédé selon revendication 6, caractérisé par les étapes suivantes :
a) début de la mesure à la plus petite fréquence $f_{min}$ avec largeur de pas minimale dF et avec le plus grand temps d'attente dt,
b) accroissement de la fréquence f par pas dF jusqu'à l'apparition du premier et du deuxième maximum ou, selon le cas, minimum,
c) estimation de la longueur (L) du tube à partir de la différence de fréquences entre les deux minima, ou selon le cas, maxima, et adaptation du temps d'attente dt et de la largeur de pas dF, le temps d'attente dt étant réglé à la valeur la plus courte possible et la largeur de pas dF à la plus grande valeur possible, et
d) mesure d'autant de maxima ou de minima que nécessaire pour la précision désirée de la mesure.

**8.** Procédé selon revendication 7, caractérisé par le fait que, vers la fin de l'intervalle de mesure, on revient à la largeur de pas minimale comme au début de la mesure.

**9.** Procédé selon revendication 7 ou 8, caractérisé par le fait que l'on commence la mesure à la fréquence maximale $f_{max}$, et l'on diminue pas à pas la fréquence de mesure f.

**10.** Procédé selon l'une des revendications 1 à 9, caractérisé par le fait que, dans le cas d'une colonne contenue dans une cavité (6, 29) ouverte des deux côtés, on applique un matériau absorbant le son à l'extrémité à laquelle on engendre l'onde stationnaire.

**11.** Dispositif de mise en oeuvre du procédé selon l'une des revendications 1 à 10, pour déterminer la longueur d'une colonne d'une matière gazeuse ou liquide, caractérisé par le fait qu'un haut-parleur (1) est assemblé à un organe de maintien à distance (4, 22) dont l'extrémité (8) située en vis-à-vis du haut-parleur (1) est appliquée à l'extrémité ouverte (5) ou à une extrémité ouverte de la cavité tubulaire (6, 29) contenant la colonne de matière gazeuse ou liquide, par le fait qu'il est prévu, comme capteur acoustique, un microphone récepteur (7, 24), par le fait que le haut-parleur (1, 23) est agencé dans une chambre de résonance (2) bordée par une enceinte (21), par le fait que l'enceinte (21) de la chambre de résonance (2) présente une ouverture de sortie de son (3) rétrécie, tubulaire, dirigée vers l'extrémité ouverte ou une extrémité ouverte (5) de la cavité (6, 29), par le fait que le haut-parleur (1, 23) est relié, par l'intermédiaire d'un régulateur (11; 26, 27), à un microphone-régulateur (10) captant la pression acoustique dans la chambre de résonance (2), ou à un microphone-régulateur (25) captant la pression acoustique de l'onde acoustique dans la région en avant de l'ouverture de sortie acoustique (3) de la chambre de résonance (2), et par le fait que le régulateur (11; 26, 27) régule le haut-parleur (1, 23) de manière que la pression acoustique de l'onde acoustique produite par le haut-parleur (1, 23) soit maintenue constante lorsque la fréquence varie.

**12.** Dispositif selon revendication 11, caractérisé par le fait que la sensibilité maximale du microphone récepteur (7, 24) est variable et par le fait qu'il est prévu un dispositif avec lequel la sensibilité maximale du microphone récepteur (7, 24) peut être adaptée à la fréquence de l'onde émise délivrée par le haut-parleur (1, 23).

13. Dispositif selon revendication 11 ou 12, caractérisé par le fait que l'organe de maintien à distance (22) présente un anneau (42) qui, par des barres (40), est assemblé à l'enceinte (21) de la chambre de résonance (2), et qui présente des barres d'appui (41) pénétrant radialement dans l'intérieur de l'anneau (42) et débordant vers l'extérieur au-delà de l'anneau (42).

14. Dispositif selon l'une des revendications 11 à 13, caractérisé par le fait que l'ouverture tubulaire (3) de sortie acoustique se rétrécit en cône vers son extrémité libre.

15. Dispositif selon l'une des revendications 11 à 14, caractérisé par le fait que les surfaces de l'organe de maintien à distance (4, 22), notamment de ses barres (41) et de son anneau (42), tournées vers l'extrémité ouverte de la cavité (6, 29), sont convexes.

Fig.1a

Fig.1b

Fig.2

Fig.3

Fig.4

Fig.5

Fig. 6 a

Fig. 6 b

Fig.7

EP 0 379 855 B1